# EUROPÄISCHE PATENTANMELDUNG

(11) **EP 2 486 983 A1**
(43) Veröffentlichungstag der Anmeldung: **15.08.2012**
(21) Anmeldenummer: 11154075.3
(22) Anmeldetag: 10.02.2011
(51) Int. Cl.: B02C 17/24

(54) **Statorkern für einen getriebelosen Antrieb einer Rohrmühle**

(71) Anmelder: ABB Schweiz AG, 5400 Baden (CH)
(72) Erfinder: Fürst, Axel, 5235, Rüfenach (CH); Horstmann, Christian, 4600, Olten (CH)
(74) Vertreter: ABB Patent Attorneys

(57) **Zusammenfassung**

Es wird ein Statorkern für einen getriebelosen Antrieb einer Rohrmühle mit hoher Steifigkeit bereitgestellt, wobei der Statorkern zusammen mit einem Statorrahmen einen Stator für einen getriebelosen Antrieb einer Rohrmühle bildet und der Statorkern aus Statorkernstücken (1, 1') zusammengesetzt ist. Diese Statorkernstücke (1, 1') sind in Drehrichtung der Rohrmühle unabhängig von dem Statorrahmen miteinander verbunden.

## Beschreibung

### TECHNISCHES GEBIET

Die vorliegende Erfindung bezieht sich auf das Gebiet getriebeloser Antriebe von Rohrmühlen. Sie betrifft einen Statorkern zur Aufnahme von Statorwicklungen für einen getriebelosen Antrieb einer Rohrmühle.

### STAND DER TECHNIK

Rohrmühlen werden zum Mahlen von Erzen, insbesondere von Kupfererzen, verwendet. Auch anderes Mahlgut wie zum Beispiel Zementprodukte wird in Rohrmühlen zermahlen. Dabei ist ein Mühlenkörper einer Rohrmühle mit einer Drehachse quer zu einem Gravitationsfeld ausgerichtet und wird von einem Antrieb in eine Drehbewegung um die Drehachse versetzt.

Wie in US 3,272,444 offenbart ist bei grossen Rohrmühlen oft ein getriebeloser Antrieb zur Ausführung der Drehbewegung vorhanden. Hierbei ist ein Rotor des getriebelosen Antriebes direkt auf dem Mühlenkörper angebracht. Als Gegenstück ist ein Stator aussen um den Rotor herum angeordnet. Der Stator, welcher typischerweise einen Durchmesser von 6 bis 15 m aufweist, umfasst einen Statorkern und einen Statorrahmen. Für den Transport ist der Statorkern in Statorkernstücke, die auch als Statorkernteile bezeichnet werden können, unterteilt. Typisch für einen getriebelosen Antrieb sind zwischen 2 und 6 Statorkernstücke. Der Statorkern nimmt Statorwicklungen auf. Über den aussen liegenden Statorrahmen ist der Statorkern mit einem Fundament verbunden und in seiner Lage mechanisch fixiert. Für die Betriebssicherheit muss die Steifigkeit des Stators so gross wie möglich sein, um Schwingungsprobleme zu vermeiden.

Bei den bekannten Statorkernen sind die Statorkernstücke nur mit dem Statorrahmen verbunden so, dass eine Verbindung zwischen den Statorkernstücken nur indirekt über den Statorrahmen erfolgt. Hierbei leistet der Statorkern nur einen kleinen Beitrag zur Steifigkeit des Stators, da dieser geteilt ist. In diesem Falle bestimmt vor allem der Statorrahmen die Steifigkeit des Stators. Dadurch ist ein erhöhter Materialaufwand bei dem Statorrahmen und daraus folgend auch bei dem Stator nötig.

### DARSTELLUNG DER ERFINDUNG

Aufgabe der vorliegenden Erfindung ist es, einen Stator mit ausreichender Steifigkeit bei vermindertem Materialaufwand für einen getriebelosen Antrieb einer Rohrmühle zur Verfügung zu stellen, wobei der Stator einen Statorkern, welcher in Statorkernstücke unterteilt ist, und einem radial ausserhalb des Statorkernes angeordneten Statorrahmen aufweist.

Diese Aufgabe wird durch einen Statorkern für einen getriebelosen Antrieb einer Rohrmühle mit den Merkmalen des Patentanspruches 1 gelöst. Bevorzugte Ausführungsformen sind Gegenstand der abhängigen Patentansprüche.

Gegenstand der Erfindung ist es, die Statorkernstücke in Drehrichtung der Rohrmühle miteinander so zu verbinden, dass eine Kraft oder ein Moment direkt, dass heisst unabhängig von einem Statorrahmen, übertragbar ist. Durch die daraus resultierende erhöhte Steifigkeit des Statorkernes, ist es möglich bei gleichbleibender Steifigkeit des Stators den Materialaufwand des Statorrahmens und den Materialaufwand des Stators zu vermindern. Die Verbindungsrichtung ist definiert durch die Lage Der Statorkernstücke zueinander und ist nicht zwingend mit der Richtung, in der die Verbindung Kräfte aufnehmen kann, identisch.

Eine erste bevorzugte Ausführungsform des Statorkernes betrifft eine formschlüssige Verbindung zwischen zwei der Statorkernstücke. Das heisst, dass zwischen den beiden Statorkernstücken irgendeine Form von Hinterschneidung besteht so, dass Teilkonturen der beiden Statorkernstücke ineinandergreifen und bei Belastung der Verbindung Flächenpressungen auf den Teilkonturen auftreten. Dadurch werden die Statorkernstücke auf Druck belastet.

Eine weitere vorteilhafte Ausführungsform betrifft eine Bolzen-, Stift- oder Nietverbindung wie beispielsweise eine Schraubenverbindung zwischen zwei der Statorkernstücke, um so ein Lösen der Verbindung zu ermöglichen. Dies umfasst auch eine Verwendung eines zusätzlichen Elementes, wie etwa einer Lasche oder einer Klammer.

Eine weitere vorteilhafte Ausführungsform betrifft eine Verzahnung wie beispielsweise eine Kerbverzahnung zwischen zwei der Statorkernstücke. Hierbei umfasst die Verzahnung auch runde Teilkonturen. Die Verzahnung ermöglicht eine einfache Herstellung der Verbindung.

Eine weitere vorteilhafte Ausführungsform betrifft eine Schwalbenschwanzverbindung zwischen zwei der Statorkernstücke. Dadurch sind zusätzlich zu Druckkräften auch Zugkräfte aufnehmbar.

Eine weitere vorteilhafte Ausführungsform betrifft eine stoffschlüssige Verbindung zwischen zwei der Statorkernstücke wie etwa eine Schweiss-, Löt- oder Klebeverbindung. Dadurch wird ein Auftreten von Kerbwirkungen in der Verbindung minimiert wird.

Eine weitere vorteilhafte Ausführungsform betrifft eine reibschlüssige Verbindung, welche auch als kraftschlüssige Verbindung bezeichnet werden kann, wie etwa eine Klemm- oder Pressverbindung. Dadurch werden Überlastungen der Verbindung sehr gut toleriert, da ein zerstörungsfreies Durchrutschen im Überlastfall möglich ist.

Eine weitere vorteilhafte Ausführungsform betrifft eine formschlüssige Verbindung zwischen zwei der Statorkernstücke, bei welcher zusätzlich ein Reibschluss auftritt. Diese Kombination aus Formschluss und Reibschluss hat sowohl eine hohe statische wie auch dynamische Tragfähigkeit.

Eine weitere vorteilhafte Ausführungsform betrifft eine vorgespannte Kerbverzahnung zwischen zwei der Statorkernstücke, welche durch ein Zugkraftelement wie etwa ein Seil, einen Draht oder einen Gurt vorgespannt ist. Diese Verbindung ist sehr einfach zu fertigen.

### DARSTELLUNG DER ERFINDUNG

Nachfolgend wird die Erfindung anhand von Ausführungsbeispielen im Zusammenhang mit den Figuren näher erläutert. Die Figuren zeigen jeweils einen Radialschnitt quer zu einer Drehachse einer Rohrmühle durch einen Statorkern, wobei der Statorkern in vier Statorkernstücke unterteilt ist, welche durch:
- Figur 1: vorgespannte Kerbverzahnungen miteinander verbunden sind;
- Figur 2: Schraubenverbindungen miteinander verbunden sind.

Die in den Zeichnungen verwendeten Bezugszeichen sind in der Bezugszeichenliste zusammengefasst. Grundsätzlich sind gleiche Teile mit denselben Bezugszeichen versehen.

### WEGE ZUR AUSFÜHRUNG DER ERFINDUNG

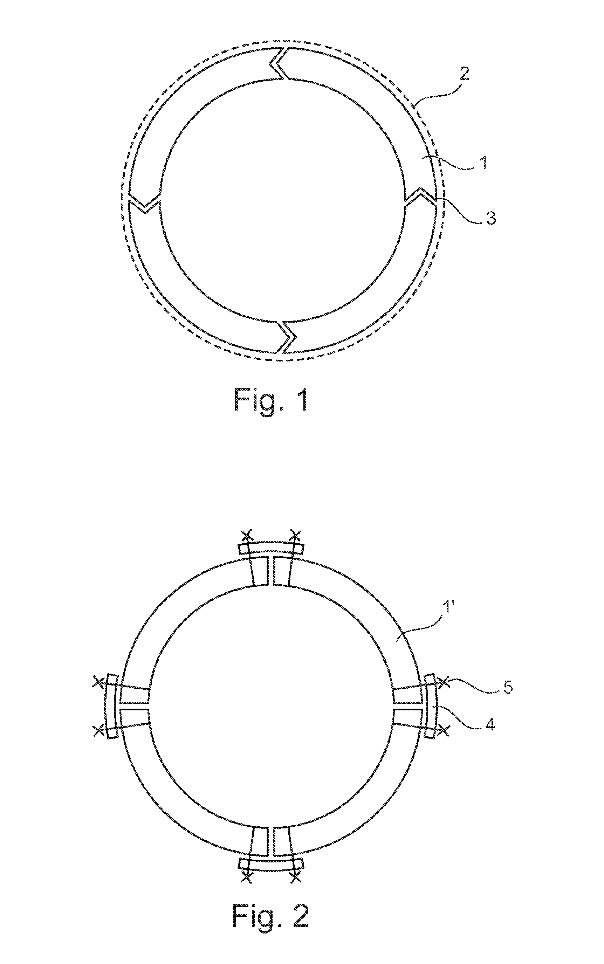

Fig. 1 zeigt einen Statorkern in einem Radialschnitt. Der Statorkern ist kreisförmig und in vier Statorkernstücke 1 unterteilt. Der Statorkern ist zumindest teilweise aus einem magnetisierbaren Material, wie etwa Stahl, gefertigt und geeignet Statorwicklungen aufzunehmen, welche in der Fig. 1 nicht dargestellt sind. Die Statorkernstücke 1 weisen jeweils an einem ersten Ende eine kerbförmige Vertiefung und an einem zweiten Ende einen kerbförmigen Vorsprung auf. Die kerbförmigen Vertiefungen und Vorsprünge besitzen eine identische Teilkontur so, dass bei einer kreisförmigen Anordnung der Statorkernstücke 1 jeweils eine Vertiefung eines Statorkernstückes 1 und ein Vorsprung eines benachbarten Statorkernstückes kerbförmige Kontaktebenen bilden und eine Kerbverzahnung 3 formen. Radial ausserhalb der kreisförmigen Anordnung der Statorkernstücke 1 befindet sich ein Seil 2, welches die Statorkernstücke 1 auf Zug miteinander verspannt. So entsteht ein geschlossener Kreisring mit hoher Steifigkeit.

Die kreisförmige Gestaltung des Statorkernes kann alternativ auch durch andere Geometrien ausgeführt werden. Einzige Restriktion der Gestaltungsfreiheit ist dabei eine quasi rotationssymmetrische Gestalt des Statorkernes, um eine problemlose Rotation eines Mühlenkörpers zu ermöglichen. Des Weiteren kann die Anzahl der Statorkernstücke beliebig variiert werden. Es ist weiter auch möglich, Statorkernstücke mit ausschliesslich Vertiefungen oder Vorsprüngen an jeweils beiden Enden der Statorkernstücke vorzusehen so, dass in der kreisförmigen Anordnung der Statorkernstücke je eine Vertiefung zu einem Vorsprung gruppiert. Auch eine Verwendung anderer Teilkonturen für die Verzahnung, insbesondere mir mehreren Vertiefungen beziehungsweise Vorsprüngen an einem Ende, ist möglich. Es ist lediglich darauf zu achten, dass eine Hinterschneidung der Statorkernstücke gewährleistet ist. Die Verspannung der Statorkernstücke kann auch durch andere Zugkraftelemente wie etwa ein Draht, ein Gurt oder Schrauben in tangentialer Richtung erfolgen. Diese Zugkraftelemente können auch in den Statorkernstücken oder radial innerhalb der kreisförmigen Anordnung der Statorkernstücke vorhanden sein.

Fig. 2 zeigt Statorkernstücke 1 mit geraden Enden so, dass bei einer kreisförmigen Anordnung der Statorkernstücke 1 Kontaktflächen in radialer Richtung entstehen. Radial ausserhalb der kreisförmigen Anordnung der Statorkernstücke 1 sind im Bereich der Kontaktflächen Laschen 4 positioniert so, dass die Laschen 4 in tangentialer Richtung mit den jeweiligen Statorkernstücken 1 einer Kontaktfläche überlappen und mit diesen Statorkernstücken 1 durch Schrauben 5 in radialer Richtung verbunden sind.

Es können auch Statorkernstücke mit schrägen Enden verwendet werden. Es ist weiter möglich, dass sich die Statorkernstücke nicht berühren sondern einen Abstand bilden. Es kann auf eine Lasche verzichtet werden, falls die Statorkernstücken selbst miteinander überlappen oder die Verschraubung in tangentialer Richtung erfolgt. Die Schraubenverbindungen in radialer und tangentialer Richtung können vorgespannt sein und so zu einem zusätzlichen Reibschluss führen.

### BEZUGSZEICHENLISTE

- 1, 1': Statorkernstück
- 2: Seil
- 3: Kerbverzahnung
- 4: Lasche
- 5: Schraube

## Patentansprüche

1. Statorkern zur Aufnahme von Statorwicklungen für einen getriebelosen Antrieb einer Rohrmühle, wobei der Statorkern zusammen mit einem Statorrahmen einen Stator für einen getriebelosen Antrieb einer Rohrmühle bildet und der Statorkern aus Statorkernstücken (1, 1') zusammengesetzt ist, **dadurch gekennzeichnet, dass** die Statorkernstücke in Drehrichtung der Rohrmühle unabhängig von dem Statorrahmen miteinander verbunden sind.

2. Statorkern nach Anspruch 1, **dadurch gekennzeichnet, dass** zwei der Statorkernstücke formschlüssig miteinander verbunden sind.

3. Statorkern nach Anspruch 2, **dadurch gekennzeichnet, dass** die zwei Statorkernstücke durch eine Bolzen-, Stift- oder Nietverbindung miteinander verbunden sind.

4. Statorkern nach Anspruch 2, **dadurch gekennzeichnet, dass** die zwei Statorkernstücke durch eine Verzahnung miteinander verbunden sind.

5. Statorkern nach Anspruch 2, **dadurch gekennzeichnet, dass** die zwei Statorkernstücke durch eine Schwalbenschwanzverbindung miteinander verbunden sind.

6. Statorkern nach Anspruch 1, d**adurch gekennzeichnet, dass** zwei der Statorkernstücke stoffschlüssig miteinander verbunden sind.

7. Statorkern nach Anspruch 1, **dadurch gekennzeichnet, dass** zwei der Statorkernstücke reibschlüssig miteinander verbunden sind.

8. Statorkern nach einem der Ansprüche 2 bis 5, d**adurch gekennzeichnet, dass** die zwei Statorkernstücke zusätzlich zu der formschlüssigen Verbindung durch eine reibschlüssige Verbindung miteinander verbunden sind.

9. Statorkern nach Anspruch 8, d**adurch gekennzeichnet, dass** die zwei Statorkernstücke durch eine vorgespannte Schraubenverbindung miteinander verbunden sind.

10. Statorkern nach Anspruch 8, **dadurch gekennzeichnet, dass** die zwei Statorkernstücke durch eine vorgespannte Kerbverzahnung (3) miteinander verbunden sind.

11. Statorkern nach Anspruch 10, **dadurch gekennzeichnet, dass** die vorgespannte Kerbverzahnung (3) durch ein Zugkraftelement in Drehrichtung der Rohrmühle vorgespannt ist.

12. Statorkernstück für einen getriebelosen Antrieb einer Rohrmühle, **dadurch gekennzeichnet, dass** das Statorkernstück (1) für eine formschlüssige Verbindung mit einem weiteren Statorkernstück ausgebildet ist.

13. Statorkernstück nach Anspruch 12, **dadurch gekennzeichnet, dass** das Statorkernstück (1') für eine Schraubenverbindung oder eine Kerbverzahnung (3) mit einem weiteren Statorkernstück ausgebildet ist.

14. Verfahren zur Herstellung eines Statorkernes für einen getriebelosen Antrieb einer Rohrmühle, wobei der Statorkern mehrere Statorkernstücke aufweist, welches den folgenden Schritt beinhaltet:
a) Statorkernstücke miteinander verbinden.
